# EUROPÄISCHE PATENTANMELDUNG

(11) **EP 0 533 992 A1**
(43) Veröffentlichungstag der Anmeldung: **31.03.1993**
(21) Anmeldenummer: 91116591.8
(22) Anmeldetag: 27.09.1991
(51) Int. Cl.: H04L 7/00, H04J 3/06

(54) **Verfahren und Schaltungsanordnung zum Bewerkstelligen synchroner Datentransfers**

(71) Anmelder: Siemens Nixdorf Informationssysteme Aktiengesellschaft, D-33102 Paderborn (DE)
(72) Erfinder: Möhring, Hermann, W-8901 Königsbrunn (DE)
(74) Vertreter: Fuchs, Franz-Josef, Dr.-Ing.

(57) **Zusammenfassung**

Zum Bewerkstelligen synchroner Datentransfers zwischen mit entsprechenden Takten (CLKA, CLKB) verschieden schnell getakteten Funktionseinheiten einer Datenverarbeitungsanlage weist eine Schaltungsanordnung ein asynchron gesteuertes Schaltwerk (SW) auf, das eine an das Schaltwerk (SW) angeschlossene Taktauswahl -und Taktdurchschalteeinrichtung (U1, U2, U3, U4, OR) zum Umschalten von einem früher ausgewählten und durchgeschalteten Takt auf einen neu ausgewählten Takt derart steuert, daß der früher ausgewählte und durchgeschaltete Takt in einer inaktiven Phase gesperrt und der neu ausgewählte Takt in einer inaktiven Phase durchgeschaltet wird.

## Beschreibung

Die Erfindung betrifft ein Verfahren und eine Schaltungsanordnung zum Bewerkstelligen synchroner Datentransfers gemäß den Oberbegriffen der Ansprüche 1 und 2.

Bei Computersystemen besteht häufig das Problem, daß Funktionseinheiten mit unterschiedlicher Taktfrequenz miteinander synchron Daten austauschen müssen. Als Beispiel für solche Funktionseinheiten seien ein Prozessor, ein Host-Bus, eine direkte Speicherzugriffssteuerung oder ein Speicher erwähnt. Um einen synchronen Datentransfer zwischen diesen Funktionseinheiten bewerkstelligen zu können, müssen die Funktionseinheiten synchronisiert werden. Das geschieht zwischen einem Speicher und einem Prozessor z.B. dadurch, daß die Taktfrequenz des Speichers an die Taktfrequenz des Prozessors angepaßt wird.

Bei der Synchronisation der verschieden schnellen Funktionseinheiten treten nun ganz erhebliche Synchronisierverluste auf. Hierzu sei zunächst erwähnt, daß sich ein Datentransfer im wesentlichen aus einer Anforderungs- und Bereitstellungsphase einer Funktionseinheit, einer Phase, in der in n einzelnen Transferzyklen Daten übertragen werden, und einer Freigabephase der Funktionseinheit zusammensetzt. n ist allgemein die Anzahl der Transferzyklen innerhalb eines Datentransfers, die beliebig sein kann. Zur Steigerung der Effektifität werden jeweils gleich mehrere Transferzyklen hintereinander ausgeführt, wenn einmal eine Funktionseinheit, z.B. der Bus, zugeteilt wurde.

Ein Transferzyklus setzt sich wiederum aus einer Datentransferanforderung und einer Datentransferbestätigung zusammen. Bisher ist eine Synchronisierung sowohl für die Anforderungs- und Bereitstellungsphase als auch für jeden einzelnen Datentransferzyklus innerhalb eines Datentransfers nötig. Die Synchronisation erfolgt dabei mit sogenannten Dual-Rank-Synchronizer, bei denen es sich im wesentlichen um zwei hintereinander geschaltete Kippschaltungen handelt. Dateneingangsseitig wird ein zu synchronisierendes Signal und takteingangsseitig ein Takt, auf den synchronisiert werden soll, zugeführt. Nach zwei Takten sind das Signal und der Takt miteinander synchronisiert.

Bezogen auf die oben erwähnten Phasen bei einem Datentransfer heißt das, daß für die Anforderungs- und Bereitstellungsphase einer Funktionseinheit zwei Takte, für n Datentransferanforderungen und ebenso vielen Datentransferbestätigungen zwei Takte mal n und für die Freigabephase zwei Takte benötigt werden. Bei einem Datentransfer mit vier Transferzyklen, was einem Standardtransfer entspricht, werden somit 20 Takte für die Synchronisation verwendet. Jeder Synchronisationstakt bedeutet dabei eine Verlustzeit, die je nach Anwendungsfall zu einer deutlichen Reduzierung der Transfer-Bandbreite führen kann.

Aufgabe der Erfindung ist es deshalb, ein Verfahren und eine Schaltungsanordnung zum Bewerkstelligen synchroner Datentransfers der eingangs genannten Art anzugeben, durch die die Anzahl der benötigten Synchronisiertakte reduziert und damit die Transfer-Bandbreite erhöht wird.

Diese Aufgabe wird für das Verfahren durch die gekennzeichneten Merkmale des Anspruchs 1 und für die Schaltungsanordnung durch die gekennzeichneten Merkmale des Anspruchs 2 gelöst.

Gemäß dem Verfahren erfolgt am Anfang eines Datentransfers eine Taktumschaltung auf einen vorgegebenen Takt, mit dem die am Datentransfer beteiligten Funktionseinheiten dann gesteuert werden. Das hat den Vorteil, daß bei den einzelnen Datentransfer zyklen der Takt nicht jedesmal neu synchronisiert werden muß, weil beide Funktionseinheiten mit dem gleichen Takt arbeiten. Die einzelnen Datentransferzyklen können deshalb jedesmal unmittelbar, also ohne vorherige Synchronisation, gestartet und beendet werden. Das hat zur Folge, daß die Anzahl der benötigten Synchronisiertakte reduziert wird, weil nun nur noch in der Phase der Anforderung und Bereitstellung einer Funktionseinheit Synchronisationstakte benötigt werden.

Bezogen auf den oben beschriebenen Fall heißt das, daß zwei Takte für die Anforderung und Bereitstellung und zwei Takte für die Freigabe einer Funktionseinheit benötigt werden. Die n x 2 Takte für die Synchronisation bei den einzelnen Transferzyklen entfallen. Die Transfer-Bandbreite wird dadurch wesentlich erhöht.

Die Umschaltung auf einen ausgewählten Takt als Datentransfertakt erfolgt in der Weise, daß ein früher durchgeschalteter Takt erst abgeschaltet wird, wenn dieser sich in einem inaktiven Zustand befindet. Weiter wird der ausgewählte Takt erst durchgeschaltet, wenn sich dieser auch in einem inaktiven Zustand befindet. Die Umschaltung erfolgt somit spike- und damit störungsfrei. Ein dynamisches Umschalten während des Betriebes ist daher auch möglich.

Die Schaltungsanordnung zur Durchführung des Verfahrens weist ein asynchron arbeitendes Schaltwerk auf, das keine Speicherbausteine benötigt. Es kann sehr leicht mit einer programmierbaren Logikanordnung, z.B. mit einem PAL-Baustein, aber auch mit jeder anderen Logikanordnung realisiert werden.

Vorteilhafte Ausgestaltungen der Erfindung sind in den Unteransprüchen gekennzeichnet.

Zum Beispiel arbeitet danach das Schaltwerk mit einer Synchronisiereinrichtung zusammen, so daß eine Taktumschaltung bereits in synchronisierter Weise erfolgt. Es kann deshalb unmittelbar nach einer Taktumschaltung mit einem Datentransfer begonnen werden.

Nachfolgend wird ein Ausführungsbeispiel der Erfindung anhand einer Zeichnung näher erläutert. Darin zeigen
- FIG 1: ein Prinzipschaltbild einer Schaltungsanordnung gemäß der Erfindung,
- FIG 2: ein Flußdiagramm der Arbeitsweise eines in der Schaltungsanordnung nach FIG 1 verwendeten Schaltwerks und
- FIG 3: ein Übergangsdiagramm der Schaltzustände des Schaltwerks nach FIG 2 in Abhängigkeit von zugeführten Signalen.

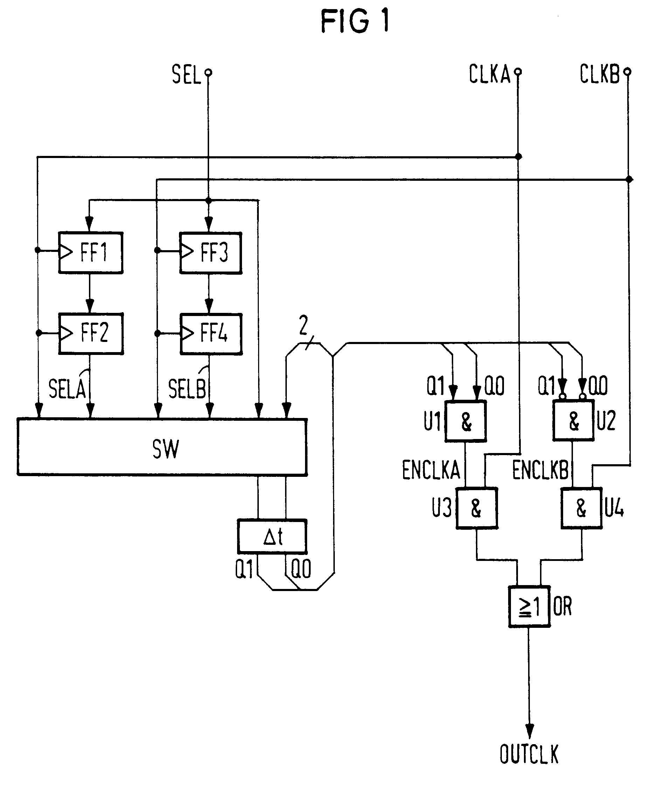

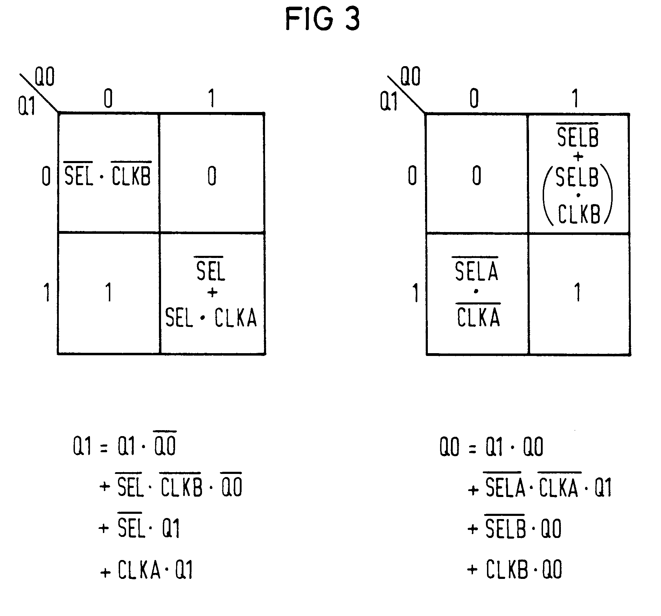

Die in der FIG 1 dargestellte Schaltungsanordnung weist ein Schaltwerk SW, eine Taktauswahl- und Taktdurchschalteeinrichtung U1, U2, U3, U4, OR und eine Synchronisiereinrichtung FF1, FF2, FF3, FF4 auf. Das Schaltwerk SW ist als asynchrones Schaltwerk realisiert, d.h. es wird nicht getaktet. Zustandsänderungen des Schaltwerks SW werden allein und sofort durch entsprechende Änderungen von Eingangssignalen bewirkt. Die für ein Schaltwerk notwendige Speicherfunktion wird durch die internen Gatterlaufzeiten hervorgerufen. Dieser Sachverhalt wird durch die mit Δt markierte Komponente ausgedrückt. Für die Berechnung des Schaltwerks SW wird auf die Ausführungen zur FIG 3 verwiesen.

Das Schaltwerk SW weist Eingänge für zwei verschieden schnelle Takte CLKA und CLKB und Ausgänge für zwei Steuersignale Q1 und Q0 auf. Außerdem weist das Schaltwerk SW Eingänge für zwei Auswahl-Synchronisiersignale SELA, SELB, einem Taktauswahlsignal SEL und zwei Steuersignalen Q1 und Q0 auf. Bei den Steuersignalen Q1 und Q0 handelt es sich um die gleichlautenden Ausgangssignale des Schaltwerks SW selbst, die auf die eigenen Eingänge rückgekoppelt sind.

Den beiden Steuersignalen Q1 und Q0 sind dabei unterschiedliche Wertigkeiten zugeordnet. Das mit Q1 bezeichnete Steuersignal ist das höherwertige und das mit Q0 bezeichnete Steuersignal ist das niederwertige Steuersignal. Die durch die beiden Steuersignale Q1 und Q0 darstellbaren Signalkombinationen geben den Schaltzustand des Schaltwerks SW an. An die Ausgänge für die Steuersignale Q1 und Q0 des Schaltwerks SW ist die Taktauswahl- und Taktdurchschalteeinrichtung U1, U2, U3, U4, OR angeschlossen. Die Taktauswahl- und Taktdurchschalteeinrichtung U1, U2, U3, U4, OR weist ein erstes und negierte Eingänge aufweisendes zweites UND-Glied U1, U2 mit jeweils zwei Eingängen für die Steuersignale Q1, Q0 des Schaltwerks SW auf. Das erste UND-Glied U1 weist einen Ausgang für ein erstes und das zweite UND-Glied U2 weist einen Ausgang für ein zweites Freischaltesignal ENCLKA und ENCLKB auf.

Das mit ENCLKA bezeichnete Freischaltesignal ist dem mit CLKA bezeichneten Takt und das mit ENCLKB bezeichnete Freischaltesignal ist dem mit CLKB bezeichneten Takt zugeordnet. Die jeweils einem Takt zugeordneten Signale sind mit dem jeweils zugehörigen Takt an Eingänge jeweils eines von zwei weiteren UND-Gliedern U3, U4 geführt. Im einzelnen sind das Freischaltesignal ENCLKA und der Takt CLKA an das UND-Glied U3 und das Freischaltesignal ENCLKB und der Takt CLKB an das UND-Glied U4 geführt.

Die Ausgänge der zwei weiteren UND-Glieder U3, U4 sind an Eingänge eines ODER-Gliedes OR geführt, dessen Ausgang ein mit OUTCLK bezeichnetes Signal führt. Bei diesem Signal handelt es sich um einen der beiden der Taktauswahl- und Taktdurchschalteeinrichtung U1, U2, U3, U4, OR zugeführten Takte CLKA, CLKB, je nach dem, welcher durch das Schaltwerk SW gesteuert durch eines der Freischaltesignale ENCLKA, ENCLKB freigeschaltet wird. Dabei werden durch die Freischaltesignale ENCLKA und ENCLKB bei einem Umschaltvorgang von dem einen auf den anderen Takt in einer Zwischenphase zuerst beide Takte gesperrt und dann erst einer der beiden Takte CLKA, CLKB freigeschaltet.

Dem Schaltwerk SW ist eine bereits erwähnte Synchronisiereinrichtung FF1, FF2, FF3, FF4 vorgeschaltet. Sie weist Eingänge für ein Taktauswahlsignal SEL und die Takte CLKA und CLKB auf. Daneben weist sie Ausgänge für den einzelnen Takten CLKA und CLKB zugeordnete Auswahl-Synchronisiersignale SELA, SELB auf. Die Ausgänge für die Auswahl-Synchronisiersignale SELA, SELB der Synchronisiereinrichtung FF1, FF2, FF3, FF4 sind mit den entsprechenden Eingängen für diese Signale des Schaltwerks SW verbunden.

Die Synchronisiereinrichtung FF1, FF2, FF3, FF4 synchronisiert das Taktauswahlsignal SEL mit den jeweiligen Takten CLKA, CLKB. Hierfür sind für jeden Takte zwei hintereinander geschaltete Kippschaltungen FF1, FF2 bzw. FF3, FF4 vorgesehen. An die Dateneingänge der jeweils ersten Kippschaltungen der Serienschaltungen von Kippschaltungen ist das Taktauswahlsignal SEL geführt. Die Takteingänge der Kippschaltungen einer Serienschaltung von Kippschaltungen sind mit jeweils einem der Takte CLKA, CLKB beschaltet. An den Ausgängen der jeweils zweiten Kippschaltungen der Serienschaltungen von Kippschaltungen liegen die Auswahl-Synchronisiersignale SELA, SELB an.

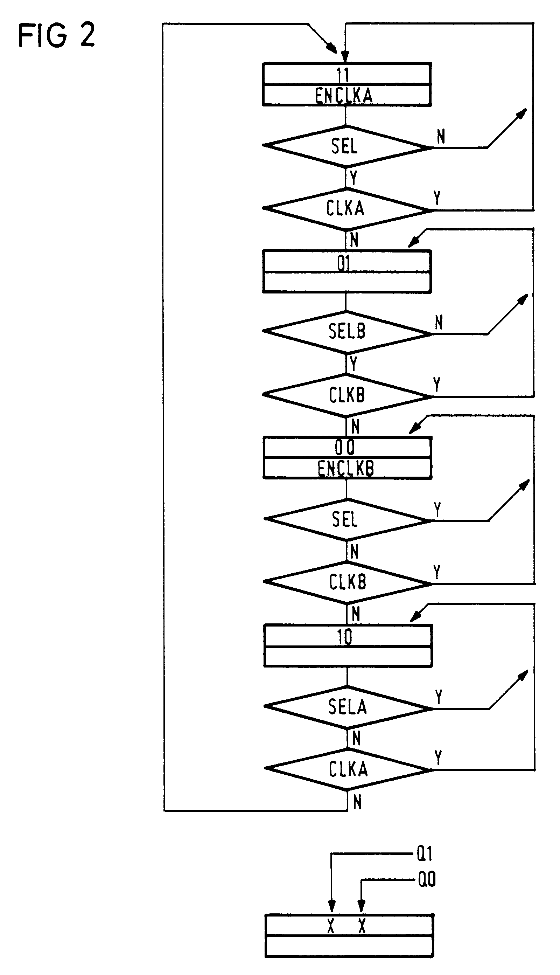

Das Steuerwerk SW wird in Abhängigkeit von den verschiedenen Eingangssignalen nach einem festen Schema in einen von vier Schaltzustände geschaltet. Dieses Schema ist in FIG 2 in Form eines Flußdiagrammes näher dargestellt. Allgemein kann gesagt werden, daß bei einer Taktumschaltung zunächst gewartet wird, bis ein zuletzt durchgeschalteter Takt einen inaktiven Zustand einnimmt, anschließend der zuletzt ausgewählte Takt gesperrt, danach ein inaktiver Zustand des neu ausgewählten Taktes abgewartet und dann dieser als neu ausgewählter Takt durchgeschaltet wird.

Beim Flußdiagramm gemäß FIG 2 wird von einem Schaltwerkzustand ausgegangen, bei dem die Steuersignale Q1, Q0 des Schaltwerks SW beide aktiv geschaltet sind. Es gilt: Q1 = 1 und Q0 = 1. Von den in FIG 1 gezeigten Freischaltesignalen ENCLKA, ENCLKB sperrt das Freischaltesignal ENCLKB den Takt CLKB und schaltet das Freischaltesignal ENCLKA den Takt CLKA frei, so daß der Takt CLKA als ausgewählter und durchgeschalteter Takt OUTCLK an den Ausgang des ODER-Gliedes OR der Taktauswahl- und Taktdurchschalteeinrichtung U1, U2, U3, U4, OR gelangt.

Für die weitere Beschreibung kann dieser Takt auch als zuletzt ausgewählter und durchgeschalteter Takt aufgefaßt werden.

Solange das Taktauswahlsignal SEL inaktiv geschaltet ist, ändert sich der Zustand des Schaltwerks SW und damit der der Steuersignale Q1, Q0 nicht. Wird das Taktauswahlsignal SEL aktiv geschaltet, wird in einer nächsten Stufe gewartet, bis der zuletzt ausgewählte Takt CLKA inaktiv geschaltet wird. Solange ändert sich der äußere Zustand des Schaltwerks SW nicht. Erst wenn der zuletzt ausgewählte Takt CLKA inaktiv geschaltet wird, ändert sich auch der Zustand des Schaltwerks SW. Das Steuersignal Q1 wird dann inaktiv geschaltet. Es gilt: Q1 = 0, Q0 = 1.

Das Freischaltesignal ENCLKA sperrt den zuletzt ausgewählten Takt CLKA. Der Takt CLKB bleibt noch gesperrt. Es wird gewartet, bis das aktiv geschaltete Taktauswahlsignal SEL mit dem hierdurch neu ausgewählten Takt CLKB in der Synchronisiereinrichtung FF1, FF2, FF3, FF4 durch die diesem Takt zugeordneten Kippschaltungen FF3, FF4 synchronisiert ist. Dieser Sachverhalt wird durch das Auswahl-Synchronisiersignal SELB angezeigt. Ist das Auswahl-Synchronisiersignal SELB ebenfalls aktiv geschaltet, wird in einer nächsten Stufe noch abgewartet, bis der neu ausgewählte Takt CLKB inaktiv geschaltet wird. Wenn das geschehen ist, schaltet das Schaltwerk SW in den nächsten Zustand. Das Steuersignal Q0 wird inaktiv geschaltet. Das heißt: Q1 = 0, Q0 = 0.

Als Folge davon wird das Freischaltesignal ENCLKB in FIG 1 inaktiv geschaltet. Der neu ausgewählte Takt CLKB wird durchgeschaltet.

Die Vorgänge beim Umschalten von dem jetzt durchgeschalteten Takt wieder auf den vorherigen, was dadurch eingeleitet wird, daß das Taktauswahlsignal SEL inaktiv geschaltet wird, laufen analog zu den vorbeschriebenen Vorgängen ab. Hierbei wird zuerst das Steuersignal Q1 = 1 und dann das Steuersignal Q0 = 1 geschaltet. Letztlich wird wieder der Ausgangszustand erreicht.

In FIG 3 ist angegeben, welche Signale in welchem Zustand des Schaltwerks SW dazu beitragen, daß das einzelne Steuersignal aktiv geschaltet wird, womit gegebenenfalls auch ein Zustandswechsel des Schaltwerks SW verbunden ist.

Die mit zwei Steuersignalen darstellbaren vier möglichen Zustände des Schaltwerks SW sind durch vier Quadranten eines Kastens dargestellt. Dabei ist für jedes Steuersignal Q1, Q0 des Schaltwerks SW ein eigener Kasten vorgesehen. Der linke obere Quadrant eines jeden Kastens stellt den Zustand des Schaltwerks SW dar, in dem das Steuersignal Q1 = 0 und das Steuersignal Q0 = 0 ist. Der rechte obere Quadrant eines jeden Kastens stellt den Zustand des Schaltwerks SW dar, in dem das Steuersignal Q1 = 0 und das Steuersignal Q0 = 1 ist. Entsprechend stellen die linken unteren Quadranten eines jeden Kastens den Zustand des Schaltwerks SW dar, in dem das Steuersignal Q1 = 1 und das Steuersignal Q0 = 0 ist, und die rechten unteren Quadranten den Zustand dar, in dem das Steuersignal Q1 = 1 und das Steuersignal Q0 = 1 ist.

In den Quadranten eines zu einem betreffenden Steuersignal gehörenden Kastens stehen die Signale, die nötig sind um das betreffende Steuersignal aus dem jeweils zugehörigen Zustand des Schaltwerks SW heraus aktiv zu schalten. Zum Beispiel wird das Steuersignal Q1 = 1 geschaltet, was einer Zustandsänderung des Schaltwerks SW entspricht, wenn aufgrund des Ausgangszustandes des Schaltwerks SW das Steuersignal Q1 = 0 und das Steuersignal Q0 = 0 war und sowohl das Taktauswahlsignal SEL als auch der Takt CLKB inaktiv geschaltet sind.

Unter den Kästen für die Steuersignale Q1, Q0 des Schaltwerks SW sind die jeweiligen logischen Verknüpfungsfunktionen zur Berechnung des dem jeweiligen Kasten zugeordneten Steuersignals angegeben. Gemäß dem oben angegebenen Beispiel können diese Verknüpfungsfunktionen direkt aus den Kästen herausgelesen werden.

Gemäß dem beschriebenen Ausführungsbeispiel weist die Synchronisiereinrichtung FF1, FF2, FF3, FF4 einen Eingang für ein Taktauswahlsignal SEL auf. Dies genügt in diesem Fall, weil nur zwei verschieden schnelle Takte zur Auswahl stehen und man mit dem einen Taktauswahlsignal SEL zwischen den beiden Takten CLKA, CLKB wählen kann. Wenn zwischen mehr als zwei verschiedenen Takten gewählt werden soll, kann dies letztlich auf die Auswahl zwischen zwei Takten, ganz gemäß dem beschriebenen Ausführungsbeispiel, zurückgeführt werden. In diesem Fall ist dann anzunehmen, daß an übergeordneter Stelle bereits eine Reduzierung der an sich noch auswählbaren Takte auf zwei Takte durchgeführt wird.

Denkbar wäre aber auch eine Erweiterung des Ausführungsbeispiels , so daß mit dieser Schaltungsanordnung unmittelbar eine Auswahl zwischen mehr als zwei Takten möglich ist. In diesem Fall wäre die Synchronisiereinrichtung beispielsweise in der Weise zu erweitern, daß für jeden weiteren Takt eine zweistufige Kippschaltung vorgesehen ist, an deren Takteingängen jeweils ein zugehöriger weiterer Takt angeschlossen ist. Als Taktauswahlsignale wären Einzeltaktauswahlsignale denkbar, die einzeln an die Dateneingänge der ersten Kippschaltungen der jeweiligen zugehörigen Serienkippschaltungen geführt sind. Das Schaltwerk SW müßte in Abhängigkeit von der dann vorliegenden erhöhten Zahl von Eingangssignalen Steuersignale erzeugen, mit denen nach den vorbeschriebenen Verfahrensschritten letztlich einer der Takte ausgewählt wird. Hierfür wäre es auch denkbar, daß die Einzeltaktsignale dann auch als Eingangssignale der Taktauswahl- und Taktdurchschalteeinrichtung zugeführt werden, um mit deren Hilfe die Taktauswahl zu steuern.

## Patentansprüche

1. Verfahren zum Bewerkstelligen synchroner Datentransfers zwischen mit entsprechenden Takten (CLKA und CLKB) verschieden schnell getakteten Funktionseinheiten einer Datenverarbeitungsanlage, **dadurch gekennzeichnet,** daß durch wenigstens ein Taktauswahlsignal (SEL) einer der Takte (z.B. CLKA) der am Datentransfer beteiligten Funktionseinheiten als Datentransfertakt für den synchronen Datentransfer ausgewählt und bei einem anderen als einem zuletzt ausgewählten Takt für den synchronen Datentransfer ein inaktiver Zustand des zuletzt ausgewählten Taktes (z.B. CLKB) abgewartet, anschließend der zuletzt ausgewählte Takt gesperrt, danach ein inaktiver Zustand des durch das Taktauswahlsignal (SEL) ausgewählten Taktes (z.B. CLKA) abgewartet und dann dieser als neu ausgewählter Takt für den synchronen Datentransfer durchgeschaltet wird.

2. Schaltungsanordnung zum Bewerkstelligen synchroner Datentransfers zwischen mit entsprechenden Takten (CLKA, CLKB) verschieden schnell getakteten Funktionseinheiten einer Datenverarbeitungsanlage, **dadurch gekennzeichnet,** daß ein asynchron arbeitendes Schaltwerk (SW) mit Eingängen für die verschieden schnellen Takte (CLKA, CLKB), für den einzelnen verschieden schnellen Takten (CLKA, CLKB) zugeordnete Auswahl-Synchronisiersignale (SELA, SELB), für wenigstens ein Taktauswahlsignal (SEL) sowie für selbst erzeugte Steuersignale (Q1, Q0) und mit Ausgängen für die selbst erzeugten Steuersignale (Q1, Q0) vorgesehen ist, das mit seinen Ausgängen für die Steuersignale (Q1, Q0) an eine Taktauswahl- und Taktdurchschalteeinrichtung (U1 bis U4, OR) angeschlossen ist, die neben Eingänge für die Steuersignale (Q1, Q0) des Schaltwerks (SW) Eingängen für mindestens noch die verschieden schnellen Takte (CLKA, CLKB) und einen Ausgang für einen aus den an den Eingängen anliegenden verschieden schnellen Takten (CLKA, CLKB) ausgewählten und durchgeschalteten Takt (OUTCLK) aufweist.

3. Schaltungsanordnung nach Anspruch 2,
**dadurch gekennzeichnet,** daß dem Schaltwerk (SW) eine Synchronisiereinrichtung (FF1 bis FF4) mit Eingängen für wenigstens ein Taktauswahlsignal (SEL) und die verschieden schnellen Takte (CLKA, CLKB) und Ausgängen für die den einzelnen verschieden schnellen Takten (CLKA, CLKB) zugeordneten Auswahl-Synchronisiersignalen (SELA, SELB) vorgeschaltet ist, deren Ausgänge für die Auswahl-Synchronisiersignale (SELA, SELB) mit den jeweils zugehörigen Eingängen für die Auswahl-Synchronisiersignale (SELA, SELB) des Schaltwerks (SW) verbunden sind.

4. Schaltungsanordnung nach Anspruch 2 oder 3,
**dadurch gekennzeichnet,** daß die Synchronisiereinrichtung (FF1 bis FF4) Eingänge für jeweils ein jeweils einen der verschieden schnellen Takte (CLKA, CLKB) auswählendes Taktauswahlsignal aufweist.

5. Schaltungsanordnung nach einem der Ansprüche 2 bis 4,
**dadurch gekennzeichnet,** daß die Synchronisiereinrichtung (FF1 bis FF4) für jeweils einen der verschieden schnellen Takte (z.B. CLKA) eine 2-fach-Serienkippschaltung (z.B. FF1, FF2) bestehend aus zwei hintereinander geschalteten Einzelkippschaltungen (z.B. FF1 und FF2) aufweist, an deren erste Kippschaltung (z.B. FF1) an den Dateneingang das zugehörige Taktauswahlsignal (z.B. SEL) und an deren beiden Kippschaltungen an die Takteingänge der jeweils zugehörige Takt (z.B. CLKA) angeschlossen sind und deren zweite Kippschaltung am Ausgang das zugehörige Taktauswahl-Synchronisiersignal (z.B. SELA) führt.

6. Schaltungsanordnung nach einem der Ansprüche 2 bis 5,
**dadurch gekennzeichnet,** daß die Taktauswahl- und Taktdurchschalteeinrichtung (U1 bis U4, OR) ein erstes und negierte Eingänge aufweisendes zweites UND-Glied (U1, U2) mit jeweils zwei Eingängen für die Steuersignale (Q1, Q0) des Schaltwerks (SW) und je einem Ausgang für ein erstes und zweites jeweils einem der verschieden schnellen Takte (CLKA, CLKB) zugeordnetes Freischaltesignal (ENCLKA, ENCLKB) aufweist, deren Ausgänge jeweils auf einen Eingang von zwei weiteren jeweils zwei Eingänge aufweisenden UND-Gliedern (U3, U4) geschaltet sind, deren jeweils zweiter Eingang mit jeweils einem der verschieden schnellen Takte (CLKA, CLKB) beschaltet sind und je einen Ausgang aufweisen, der mit einem Eingang eines ODER-Gliedes (OR) verbunden ist, das am Ausgang den ausgewählten und durchgeschalteten Takt (OUTCLK) führt.

7. Schaltungsanordnung nach einem der Ansprüche 2 bis 6,
**dadurch gekennzeichnet,** daß das Schaltwerk (SW) Schaltzustände aufweist, in denen die Steuersignale (Q1, Q0) des Schaltwerks (SW), von denen eines eine höhere (z.B. Q1) und eines eine niedere (z.B. Q0) Wertigkeit aufweist, Signalzustände annehmen, in denen das niederwertige Steuersignal (z.B. Q0) der logischen Verknüpfungsfunktion 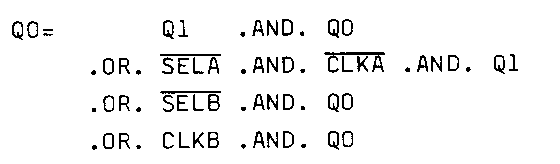 und das höherwertige Steuersignal (z.B.Q1) der logischen Verknüpfungsfunktion 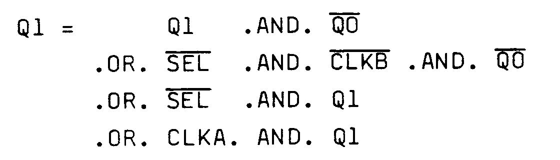 genügt.

8. Schaltungsanordnung nach einem der Ansprüche 2 bis 7,
**dadurch gekennzeichnet,** daß die Taktauswahl- und Taktdurchschalteeinrichtung (U1 bis U4, OR) wenigstens einen Eingang für ein einen der verschieden schnellen Takte (CLKA, CLKB) auswählendes Taktauswahlsignal aufweist.
